# EUROPEAN PATENT APPLICATION

(11) **EP 4 596 146 A1**
(43) Date of publication of application: **06.08.2025**
(21) Application number: 25150626.7
(22) Date of filing: 08.01.2025
(51) Int. Cl.: B22F 10/68, B08B 7/02, B22F 10/73, B29C 64/35, B29C 64/357, B33Y 30/00, B33Y 40/00, B33Y 40/20, B22F 12/88

(54) **AUTOMATED DE-POWDERING OF ADDITIVE MANUFACTURING BUILD**

(30) Priority: 31.01.2024 US 202418428526
(71) Applicant: General Electric Company, Evendale, Ohio 45215 (US)
(72) Inventor: Koenig, Matthew Stuart, West Chester, 45069 (US); Lueschen, Peter Douglas, West Chester, 45069 (US); Steele, William Joseph, West Chester, 45069 (US); McClain, David, West Chester, 45069 (US); Song, Hangil, West Chester, 45069 (US)
(74) Representative: Hafner & Kohl PartmbB

(57) **Abstract**

An automated de-powdering system (150) comprises a sleeve (170) alignable with a build box (104) where the build box (104) includes one or more sidewalls (106) and a build plate (140). The one or more sidewalls (106) and the build plate (140) define a build chamber (108) configured to contain an additive manufacturing build (110) where the additive manufacturing build (110) includes one or more objects (130) disposed within a powder build material (114). At least one actuator (142, 166, 173, 188) is actuatable to move the additive manufacturing build (110) out of the build box (104) and into the sleeve (170). At least one mechanism (220) is actuatable to separate at least a portion of the powder build material (114) from the one or more objects (130).

## Description

### FIELD

The present disclosure generally pertains to additive manufacturing machines and systems.

### BACKGROUND

Three-dimensional objects may be additively manufactured using an additive manufacturing machine. One type of additive manufacturing is binder jetting. In binder jet additive manufacturing, a liquid binder is used to join particles of a powder to form a three-dimensional object. For example, a controlled pattern of the liquid binder is applied to successive layers of the powder in a powder bed such that the layers of the material adhere to one another to form a three-dimensional green part. Through subsequent processing (e.g., sintering), the three-dimensional green part can be formed into a finished three-dimensional part.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 schematically depicts an exemplary additive manufacturing system in accordance with an embodiment of the present disclosure.
FIG. 2 schematically depicts an exemplary automated de-powdering system in accordance with embodiments of the present disclosure.
FIG. 3 schematically depicts the exemplary automated de-powdering system of FIG. 2 during a subsequent stage of a de-powdering process in accordance with embodiments of the present disclosure.
FIG. 4 schematically depicts the exemplary automated de-powdering system of FIGS. 2 and 3 during another subsequent stage of a de-powdering process in accordance with embodiments of the present disclosure.
FIG. 5 schematically depicts an exemplary embodiment of a separation mechanism of the automated de-powdering system of FIGS. 2-4 in accordance with embodiments of the present disclosure.
FIG. 6 provides an example computing system according to example embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of' in the context of, e.g., "at least one of A, B, or C" refers to only A, only B, only C, or any combination of A, B, and C.

As used herein, the terms "first," "second," and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present invention may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets, laser jets, and binder jets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

In this regard, utilizing additive manufacturing methods, even multi-part components may be formed as a single piece of continuous material, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral mounting features. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved functionality and reliability.

Unlike laser melting and laser sintering additive manufacturing techniques, which heat the material to consolidate and build layers of the material to form a printed part (e.g., metal or ceramic part), binder jetting uses a chemical binder to bond particles of the material into layers that form a green body of the printed part. As defined herein, the green body of the printed part is intended to denote a printed part that has not undergone heat treatment to remove the chemical binder. Chemical binding has been used in sand molding techniques to bond sand particles and form a sand mold that can be used to fabricate other parts. Similar to sand molding, in binder jet printing, the chemical binder is successively deposited into layers of powder to print the part. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering) to form a consolidated part.

In certain post printing processes, the green body part may undergo a de-powdering process. The de-powdering process removes portions of the powder that have not been bound (e.g., adhered) by the chemical binder. However, de-powdering of the green body part is generally done before heat treating (e.g., pre-sintering) the green body part. Heat treating the green body part removes the chemical binder and builds handling strength. Therefore, during a de-powdering processes, the green body part may have insufficient handling strength and be susceptible to damage.

The present disclosure generally provides an apparatus and technique for automated de-powdering of an additively manufactured three-dimensional object. In exemplary embodiments, the de-powdering apparatus includes a separation station where at least a portion of an additive manufacturing build is pushed out of a build box and separated from a remaining portion of the additive manufacturing build within the build box. The separated portion of the additive manufacturing build is exposed to one or more agitation mechanisms that function to separate unbound powder build material from the three-dimensional object while minimizing disturbances to the green additively manufactured objects. Exemplary embodiments of the present disclosure decrease the time required for de-powdering (e.g., compared to de-powdering performed manually) and can accommodate complex build orientations and objects.

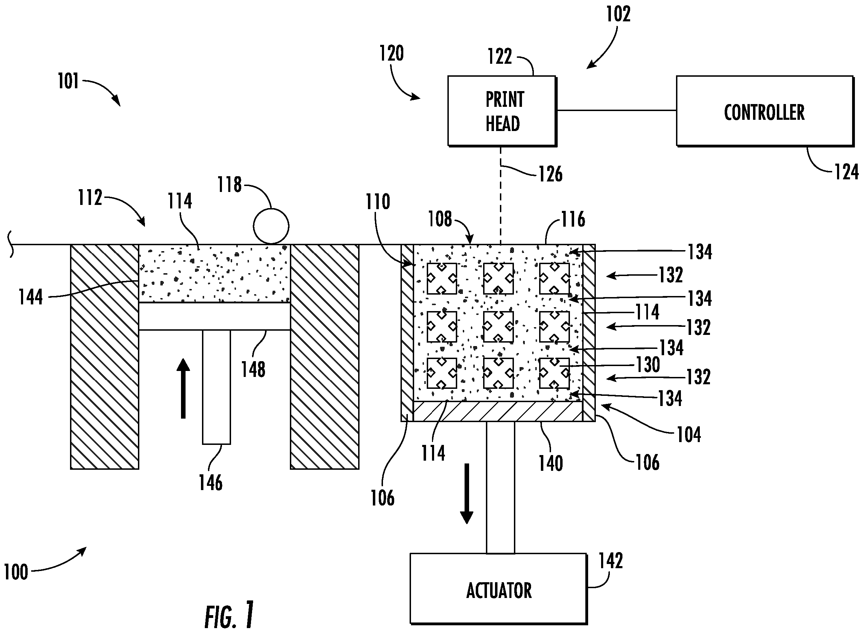

Referring now to FIG. 1, the presently disclosed subject matter will now be described in further detail. FIG. 1 schematically depicts an exemplary additive manufacturing system 100 according to the present disclosure. In exemplary embodiments, the additive manufacturing system 100 may be referred to as a build station 101 such that the additive manufacturing system 100 may be used to additively manufacturing or build one or more additively manufactured objects. The additive manufacturing system 100 may include one or more additive manufacturing machines 102. In the illustrated embodiment, the additive manufacturing machine 102 comprises a binder jet additive manufacturing machine. In the illustrated embodiment, the additive manufacturing machine 102 includes a build box 104 defined by a plurality of sidewalls 106 and defining a build chamber 108 for an additive manufacturing build 110. The additive manufacturing machine 102 includes a powder source 112 configured to deposit one or more layers of a powder build material 114 onto a build surface 116 within the build box 104. For example, the powder source 112 includes a spreader or recoater 118 configured to be movable across the powder source 112 to spread one or more layers of the powder build material 114 onto the build surface 116.

In the illustrated embodiment, the additive manufacturing machine 102 includes a print system 120 including at least one print head 122 movable across the build surface 116, and a controller 124 communicatively coupled to the print head 122. The print head 122 is configured to dispense a binder 126 to the one or more layers of the powder build material 114 (e.g., on the build surface 116). The controller 124 is configured to control the movement of the print head 122 and the delivery of the binder 126 in a defined two-dimensional pattern to form one or more three-dimensional parts or objects 130 on a layer-by-layer basis. As depicted in FIG. 1, the one or more objects 130 may be formed or delineated into one or more build layers 132 vertically stacked and nested with one or more foundation layers 134 disposed vertically adjacent or between the one or more build layers 132. The one or more build layers 132 include the one or more objects 130 suspended or disposed within the powder build material 114, and the one or more foundation layers 134 include the powder build material 114 being devoid of the one or more objects 130.

In FIG. 1, the build box 104 also comprises a build plate 140 defining a lower boundary of the build chamber 108. The build plate 140 is vertically movable within the build box 104 by an actuator 142. In operation, the actuator 142 lowers the build plate 140 incrementally as each layer of the powder build material 114 is distributed across the build surface 116.

In the illustrated embodiment, the powder source 112 comprises a supply chamber 144 containing a supply of the powder build material 114. A piston 146 may be actuatable to elevate a supply chamber plate 148 during operation of the additive manufacturing machine 102. As the supply chamber plate 148 is elevated, a portion of the powder build material 114 is forced out of the supply chamber 144, and the recoater 118 sequentially distributes thin layers of the powder build material 114 onto the build surface 116.

As described above, binder jetting uses a chemical binder to bond particles of the powder build material 114 into layers that form a green body of the printed object 130. After printing, the object 130 may undergo additional processing, by way of non-limiting example, a cure process, a heat treatment process, or other type of post-printing process to dry the powder build material 114 or chemically activate or modify the binder. A de-powdering process is also performed to remove portions of the powder build material 114 that have not been bound (e.g., adhered) by the chemical binder (e.g., generally surrounding the green body of the printed object 130). Generally, de-powdering of the green body of the printed object 130 is generally done before heat treating (e.g., pre-sintering) of the green body of the printed object 130 to create a brown body part. Heat treating the green body to create a brown body part removes the chemical binder and builds handling strength. Therefore, during a de-powdering process, the green body of the printed object 130 may have insufficient handling strength and be susceptible to damage.

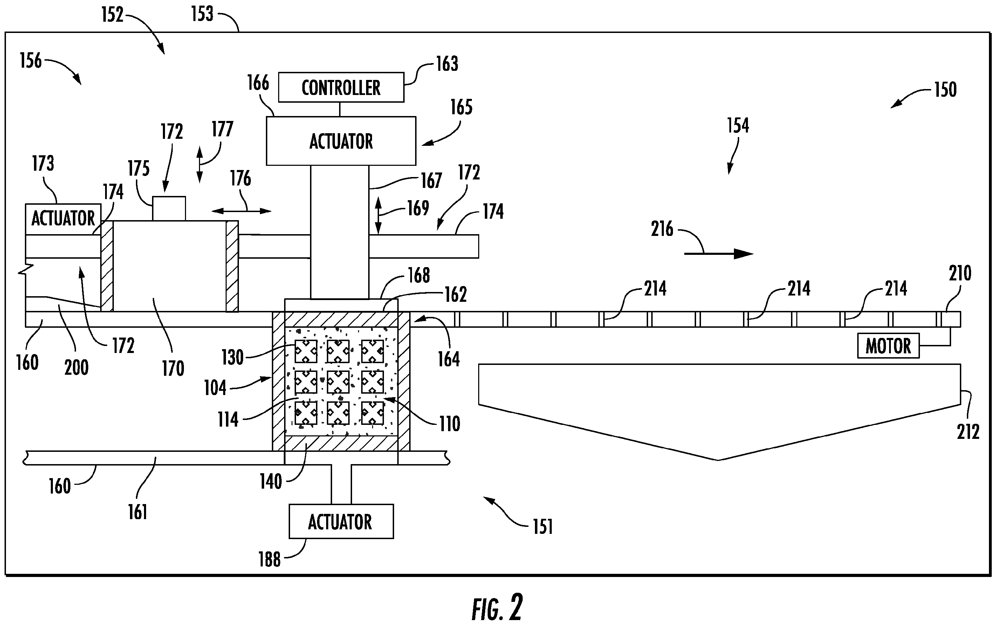

FIG. 2 is a schematic diagram illustrating an automated de-powdering system 150 according to embodiments of the present disclosure. In the illustrated embodiment, the automated de-powdering system 150 includes an automated de-powdering machine 151. In exemplary embodiments, the automated de-powdering machine 151 may be separate or distinct from one or more of the additive manufacturing machines 102 (FIG. 1) such that additive manufacturing builds 110 from any of the one or more additive manufacturing machines 102 may be loaded into the automated de-powdering machine 151 for powder removal. However, it should also be understood that in exemplary embodiments, the automated de-powdering machine 151 may form part of the additive manufacturing system 100 (FIG. 1) or be connected to one or more of the additive manufacturing machines 102 (FIG. 1) to facilitate a transfer of an additive manufacturing build 110 from one or more of the additive manufacturing machines 102 (FIG. 1) to the automated de-powdering machine 151. In exemplary embodiments, the automated de-powdering machine 151 may be contained within a sealed or sealable chamber 153 to provide a controllable environment for the automated de-powdering process. For example, the chamber 153 may be sealed or sealable to provide an inert environment during a de-powdering process to accommodate automated de-powdering of reactive materials.

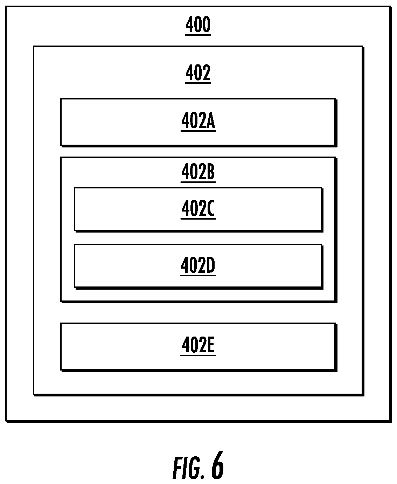

In exemplary embodiments, the automated de-powdering machine 151 includes a separation station 152 and a de-powdering station 154. FIG. 2 depicts a stage 156 of a de-powdering process such that the build box 104 containing the additive manufacturing build 110 is positioned within the separation station 152. For example, the separation station 152 is configured to receive the build box 104 with the additive manufacturing build 110 within the build box 104 from the additive manufacturing machine 102 (FIG. 1). In exemplary embodiments, the separation station 152 includes a support structure 160 configured to receive the build box 104 with the additive manufacturing build 110 within the build box 104. In exemplary embodiments, at least a portion of the support structure 160 may include a dock or conveyor 161 for receiving the build box 104 and loading the build box 104 into the separation station 152. In exemplary embodiments, the conveyor 161 may be automatically controlled, such as by exemplary computing devices of the computing system 400 described below with reference to FIG. 6. In exemplary embodiments, the conveyor 161 may be automatically controlled to transport and position the build box 104 in the separation station 152 in a particular location for further processing within the separation station 152. The conveyor 161 may also be configured to receive a build box 104 from one or more different additive manufacturing machines 102 (FIG. 1) or may be coupled to each of one or more additive manufacturing machines 102 (FIG. 1) such that the automated de-powdering system 150 may de-powder additive manufacturing builds 110 received from multiple additive manufacturing machines 102 (FIG. 1).

In the illustrated embodiment, the build box 104 also includes a cover 162 disposed proximate a top portion 164 of the build box 104 and extending over or covering the additive manufacturing build 110. In exemplary embodiments, the build box 104 may be transferred from the additive manufacturing machine 102 (FIG. 1) to the automated de-powdering machine 151 with the cover 162 on the build box 104 so that the additive manufacturing build 110 is maintained within a particular or controlled environment within the build box 104. In exemplary embodiments, the separation station 152 includes a lift system 165 configured to lift or remove the cover 162 from the build box 104. For example, in exemplary embodiments, the lift system 165 includes an actuator 166, a shaft 167, and a gripping plate 168. The gripping plate 168 may include mechanical, vacuum-based, or other types of mechanisms configured to engage and secure the cover 162 to the gripping plate 168. The actuator 166 is actuatable to raise and lower the gripping plate 168 with respect to the build box 104 in the directions indicated by an arrow 169. In operation, actuation of the actuator 166 may cause the shaft 167 to extend or retract in the directions indicated by the arrow 169 to enable the gripping plate 168 to engage the cover 162 and remove or lift the cover 162 away from the build box 104. It should be understood that the lift system 165 may also be actuated to replace the cover 162 onto the build box 104. Actuation or control of the lift system 165 may be automatically controlled, such as by a controller 163. The controller 163 may be configured similar to exemplary computing devices of the computing system 400 described below with reference to FIG. 6. The controller 163 may also be used to control operation or actuation of the conveyor 161. Although a single controller 163 is depicted in FIG. 2, it should be understood that multiple controllers may be used to control or actuate the various components of the automated de-powdering machine 151.

In exemplary embodiments, the separation station 152 also includes a sleeve 170. In exemplary embodiments, the sleeve 170 is coupled to a track system 172, and the track system 172 is coupled to an actuator 173. The track system 172 may comprise one or more horizontal rails 174 and one or more vertical rails 175. The sleeve 170 is coupled to the track system 172 such that the sleeve 170 is movable along the horizontal rails 174 in the directions indicated by an arrow 176, and the sleeve 170 is movable along the vertical rails 175 in the directions indicated by an arrow 177. Actuation of the actuator 173 causes corresponding movement of belts, gears, or other types or mechanical or electromechanical linkages to enable movement of the sleeve 170 in any direction or combination of directions indicated by the arrows 176 and 177. The actuator 173 may comprise any type of mechanical, electromechanical, hydraulic, pneumatic, or other type of device controllable to cause movement of the track system 172 and corresponding movement of the sleeve 170. In exemplary embodiments, the actuator 173 may be controlled to locate the sleeve 170 in particular positions with respect to the build box 104, the separation station 152, or the de-powdering station 154. Operation of the actuator 173 may be automatically controlled, such as by the controller 163.

In the illustrated embodiment, the separation station 152 also includes an actuator 188 engageable with the build plate 140 and actuatable to cause movement of the build plate 140 with respect to the build box 104. The separation station 152 also includes a separation mechanism 200. As will be further described below, the separation mechanism 200 is insertable into the additive manufacturing build 110 to separate a portion of the additive manufacturing build 110 from a remaining portion of the additive manufacturing build 110. Operation of the actuator 188 may be automatically controlled, such as by the controller 163.

In FIG. 2, the de-powdering station 154 includes a conveyor 210 and a hopper 212. In exemplary embodiments, the conveyor 210 is disposed adjacent to the separation station 152 and is configured to receive at least a portion of the additive manufacturing build 110 from the separation station 152. In exemplary embodiments, the conveyor 210 comprises a sieve conveyor, in one non-limiting example, having a number of openings or apertures 214 therein to enable unbound powder build material 114 to pass or fall therethrough and be collected by the hopper 212. In the illustrated embodiment, the conveyor 210 is configured to convey or transport the one or more objects 130 away from the separation station 152 as indication by a direction 216. The conveyor 210 may comprise a belt with the apertures 214, a series of spaced-apart rollers defining the apertures 214, or other type or conveying mechanism. In exemplary embodiments, the conveyor 210 may be coupled to a motor 218 such that the motor 218 is operable to drive or actuate the conveyor 210 to move or transport the portions of the additive manufacturing build 110 in the direction 216. The motor 218 may also be controlled or actuated by the controller 163.

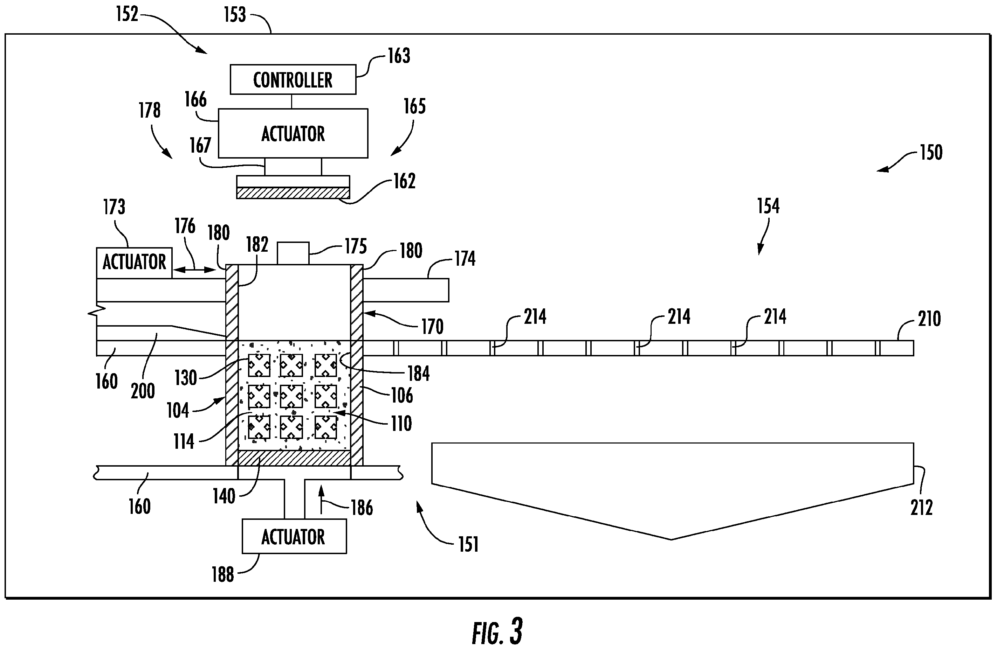

FIG. 3 is a schematic diagram illustrating the automated de-powdering system 150 of FIG. 2 at a stage 178 of a de-powdering process subsequent to the stage 156 depicted in FIG. 2. In FIG. 3, the lift system 165 has been actuated and the cover 162 has been lifted and removed from the build box 104. Additionally, the sleeve 170 has been positioned over the build box 104 (e.g., via actuation of the actuator 173 and movement of the sleeve 170 along the horizontal rail 174). In exemplary embodiments, the sleeve 170 comprises one or more sleeve sidewalls 180 defined such that interior surfaces 182 of the sleeve sidewalls 180 may be disposed in substantial alignment with interior surfaces 184 of the sidewalls 106 of the build box 104. As will be described in greater detail below, the build plate 140 may be elevated in a direction 186 by the actuator 188 to elevate or raise the additive manufacturing build 110 with respect to the build box 104 such that at least a portion of the additive manufacturing build 110 extends into the sleeve 170.

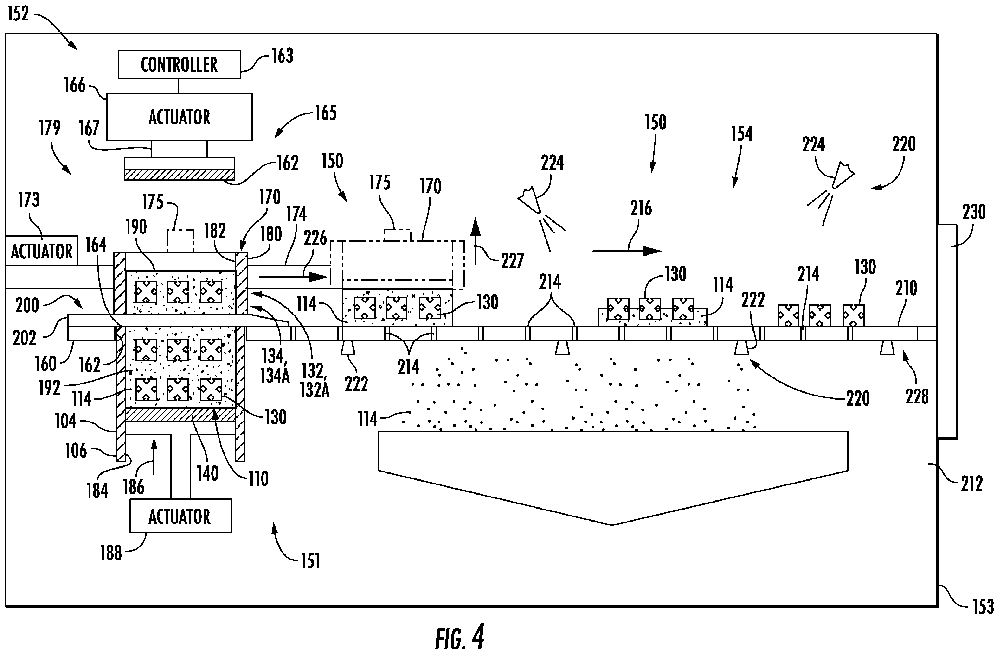

FIG. 4 is a schematic diagram illustrating the automated de-powdering system 150 of FIGS. 2 and at a stage 179 of a de-powdering process subsequent to the stage 178 depicted in FIG. 3. In FIG. 4, the build plate 140 has been elevated in the direction 186 by the actuator 188 to elevate or raise the additive manufacturing build 110 such that at least a portion 190 of the additive manufacturing build 110 extends upwardly into the sleeve 170. As illustrated in FIG. 4, the additive manufacturing build 110 is elevated such that at least one build layer 132A of the one or more build layers 132 is disposed above the top portion 164 of the build box 104 and resides within the sleeve 170. In exemplary embodiments, the additive manufacturing build 110 is elevated such that at least a portion of a foundation layer 134A of the one or more foundation layers 134 is positioned flush with or slightly above the top portion 164 of the build box 104 and aligned with the separation mechanism 200.

As briefly described above, in exemplary embodiments, the separation station 152 includes the separation mechanism 200 configured to separate the portion 190 of the additive manufacturing build 110 within the sleeve 170 from a portion 192 of the additive manufacturing build 110 remaining within the build box 104. In exemplary embodiments, the sleeve 170 is positioned to enable the separation mechanism 200 to be disposed between the sleeve 170 and the top portion 164 of the build box 104 (e.g., aligned with one of the one or more foundation layers 134). In exemplary embodiments, the separation mechanism 200 comprises a cutting knife 202 insertable into and through the additive manufacturing build 110. However, it should be understood that the separation mechanism 200 may also comprise one or more of a saw, a fluidization device (e.g., a nozzle or other type of fluid ejection mechanism configured to fluidize the powder build material 114) or other type of mechanism to separate the portion 190 of the additive manufacturing build 110 from the portion 192 of the additive manufacturing build 110 at the foundation layer 134A. In operation, the sleeve 170 stabilizes the portion 190 during the separation process. In exemplary embodiments, the separation mechanism 200 may be coupled to or integrated with the sleeve 170 such that the separation mechanism 200 is movable with the sleeve 170. For example, in exemplary embodiments, the separation mechanism 200 may be movably coupled to the sleeve 170 such that the separation mechanism 200 may be moved with respect to the sleeve 170 to be inserted into the additive manufacturing build 110. Additionally, the separation mechanism 200 may be coupled to the sleeve 170 such that when the sleeve is moved via the track system 172, the separation mechanism 200 moves with the sleeve 170 in a corresponding direction. In this manner, for example, after the separation mechanism 200 is used to separate the portion 190 from the portion 192, the separation mechanism 200 may remain beneath the portion 190 while the sleeve 170 is moved to convey the portion 190 to the de-powdering station 154. Actuation of the separation mechanism 200 between an extended position (i.e., into the additive manufacturing build 110) or a retracted position (i.e., a position resulting in the sleeve 170 being open to receive insertion of at least a portion of the additive manufacturing build 110 therein) may be performed by the actuator 173 or a different actuation mechanism. In exemplary embodiments, the sleeve 170 may include an opening, slot, channel, or recess for receiving a slidable insertion of the separation mechanism 200 into the sleeve 170, or the sleeve 170 may be positioned slightly above the build box 104 to enable the separation mechanism 200 to be inserted above the build box 104 and into the additive manufacturing build 110. It should be understood that the cutting mechanism 200 may be thin but is depicted in FIGS. 2-4, for illustrative purposes, having a thickness greater than a thickness of an actual configuration of the cutting mechanism 200.

In the illustrated embodiment, the de-powdering station 154 also comprises one or more agitation mechanisms 220 to separate the unbound powder build material 114 from the one or more objects 130. For example, in the illustrated embodiment, the one or more agitation mechanisms 220 include one or more vibration mechanisms 222 proximate or coupled to the conveyor 210 at one or more locations along the conveyor 210. The one or more vibration mechanisms 222 may comprise one or more pneumatic or ultrasonic transducers to impart vibrations to the conveyor 210, thereby also imparting vibrations to the one or more objects 130 and the unbound powder build material 114. Thus, while the portion 190 is on the conveyor 210 (either in a stationary position or being moved along the conveyor 210), the vibrations imparted to the one or more objects 130 and the unbound powder build material 114 loosen and separate the unbound powder build material 114 from the one or more objects 130, and the unbound powder build material 114 falls through the conveyor 210 and is collected by the hopper 212. Additionally or alternatively, the one or more agitation mechanisms 220 may include one or more fluidization mechanisms 224. In exemplary embodiments, the one or more fluidization mechanisms 224 may comprise one or more nozzles or other types of fluid ejectors configured to direct a fluid toward the one or more objects 130 to separate the unbound powder build material 114 from the one or more objects 130 as the one or more objects are conveyed along the conveyor 210. The one or more agitation mechanisms 220 may be automatically controlled, such as by exemplary computing devices of the computing system 400 described below with reference to FIG. 6.

Thus, in operation, the portion 190 of the additive manufacturing build 110 is elevated upwardly out of the build box 104 and into the sleeve 170. The separation mechanism 200 is inserted into the additive manufacturing build 110 and separates the portion 190 from the portion 192 of the additive manufacturing build 110. In exemplary embodiments, the sleeve 170 may be moved by the actuator 173 via the horizontal rail in a direction indicated by an arrow 226 to move the portion 190 away from the separation station 152 and move the portion 190 onto the conveyor 210. In exemplary embodiments, after placing the portion 190 onto the conveyor 210, the separation mechanism 200 may be retracted from its position beneath the portion 190, and the sleeve 170 may be removed from the portion 190. For example, in exemplary embodiments, the sleeve 170 may be moved vertically upwards in the direction indicated by an arrow 227 via the vertical rail 175 by the actuator 173 (the elevated position of the sleeve 170 depicted in phantom lines in FIG. 4 representing a removed position of the sleeve 170 with respect to the portion 190). Alternatively, the sleeve 170 may remain on the portion 190 for part or all of the transported distance on the conveyor 210. As illustrated in FIG. 4, while the one or more objects 130 are on the conveyor 210, unbound powder build material 114 is gradually separated from the one or more objects 130 and collected by the hopper 212. The one or more agitation mechanisms 220 may be actuated while the one or more objects 130 are in a stationary location on the conveyor 210 or may be actuated while the one or more objects 130 are conveyed by the conveyor 210 toward an end 228 of the conveyor 210. In exemplary embodiments, the sleeve 170 with the portion 190 is moved to the conveyor 210 prior to automatically actuating the one or more agitation mechanisms 220. The above procedure may then be repeated for additional portions of the additive manufacturing build 110 (e.g., the sleeve 170 and may be returned to the separation station 152 (e.g., via the track system 172) to facilitate the separation and de-powdering of another portion of the additive manufacturing build 110). It should also be understood that the process of separating the additive manufacturing build 110 into multiple portions may also not be required. In such exemplary embodiments, the entire additive manufacturing build 110 contained within the build box 104 may be moved into the sleeve 170 and thereafter moved to the conveyor 210 for de-powdering.

In exemplary embodiments, an airlock door 230 may be included on the chamber 153 positioned or located near or at the end 228 of the conveyor 210. As described above, the automated de-powdering machine 150 may be located in the chamber 153 such that an inert or controlled atmosphere is provided during the automated de-powdering process. Thus, in exemplary embodiments, the airlock door 230 may enable removal of the objects 130 from the conveyor 210 without stopping a separation or de-powdering process associated with other objects 130 or additive manufacturing build 110. It should also be understood that one or more additional airlock doors 230 may be located on the chamber 153 such as, by way of non-limiting example, at an entry location to the chamber 153 for receiving the build box 104 and loading the build box 104 into the separation station 152.

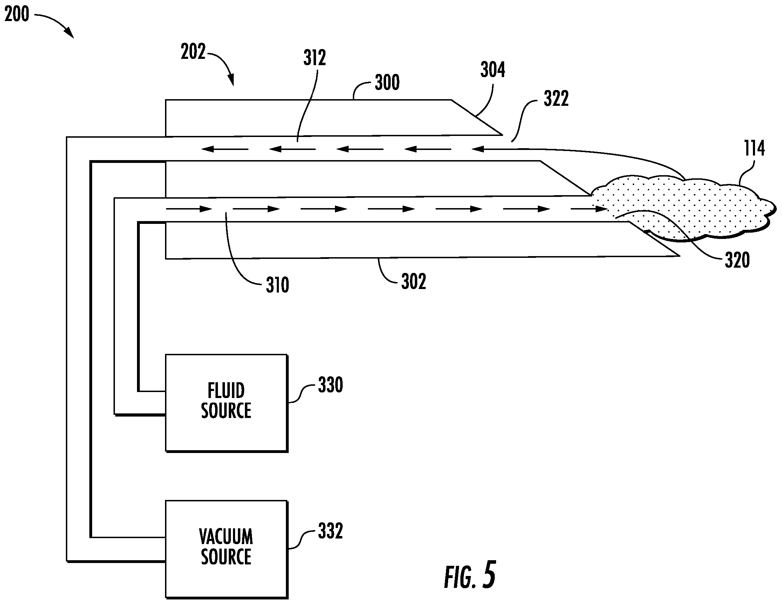

FIG. 5 is a schematic diagram depicting an exemplary embodiment of the separation mechanism 200 of FIGS. 2-4 according to the present disclosure. In FIG. 5, the separation mechanism 200 comprises the cutting knife 202. In the illustrated embodiment, the cutting knife 202 includes a top side 300, a bottom side 302 opposite the top side 300, and a cutting edge 304 extending at least partially between the top side 300 and the bottom side 302. In exemplary embodiments, the cutting edge 304 is disposed at a non-orthogonal angle with respect to the top side 300 or the bottom side 302 to facilitate the insertion of the cutting edge 304 into the additive manufacturing build 110 (FIGS. 1-4). In exemplary embodiments, the cutting knife 202 also includes one or more fluidization channels 310 and one or more vacuum channels 312. In the illustrated embodiment, at least a portion of the one or more fluidization channels 310 and at least a portion of the one or more vacuum channels 312 are disposed between the top side 300 and the bottom side 302. In exemplary embodiments, the one or more fluidization channels 310 are disposed below the one or more vacuum channels 312 within the cutting knife 202. In other words, the one or more fluidization channels 310 are located closer to the bottom side 302 than are the one or more vacuum channels 312.

The one or more fluidization channels 310 include an exit port 320 located along or on the cutting edge 304, and the one or more vacuum channels 312 include an entry port 322 along or on the cutting edge 304. The one or more fluidization channels 310 are fluidically coupled to a fluid source 330, and the one or more vacuum channels 312 are fluidically coupled to a vacuum source 332. The fluid source 330 may be a source of a pressurized gas such that actuation of the fluid source 330 causes a fluid to be ejected from the exit port(s) 320 of the one or more fluidization channels 310. The fluid may be any type of fluid such as, by way of non-limiting example, a gas (including compressed gas) such as atmospheric air, nitrogen gas, or an inert gas (e.g., argon). The vacuum source 332 is actuatable to draw a vacuum through the one or more vacuum channels 312.

FIG. 6 provides an example computing system 400 according to example embodiments of the present disclosure. The computing devices or elements described herein, such as the controller 163, may include various components and perform various functions of the computing system 400 described below, for example.

As shown in FIG. 6, the computing system 400 can include one or more computing device(s) 402. The computing device(s) 402 can include one or more processor(s) 402A and one or more memory device(s) 402B. The one or more processor(s) 402A can include any suitable processing device, such as a microprocessor, microcontroller, integrated circuit, logic device, and/or other suitable processing device. The one or more memory device(s) 402B can include one or more computer-executable or computer-readable media, including, but not limited to, non-transitory computer-readable media, RAM, ROM, hard drives, flash drives, and/or other memory devices.

The one or more memory device(s) 402B can store information accessible by the one or more processor(s) 402A, including computer-readable instructions 402C that can be executed by the one or more processor(s) 402A. The instructions 402C can be any set of instructions that when executed by the one or more processor(s) 402A, cause the one or more processor(s) 402A to perform operations. In some embodiments, the instructions 402C can be executed by the one or more processor(s) 402A to cause the one or more processor(s) 402A to perform operations, such as any of the operations and functions for which the computing system 400 and/or the computing device(s) 402 are configured, such as controlling operation or actuation of actuators 166, 173, or 188, the agitation mechanisms 220, the motor 218, or other components of the automated de-powdering machine 151. The instructions 402C can be software written in any suitable programming language or can be implemented in hardware. Additionally, and/or alternatively, the instructions 402C can be executed in logically and/or virtually separate threads on processor(s) 402A. The memory device(s) 402B can further store data 402D that can be accessed by the processor(s) 402A. For example, the data 402D can include models, lookup tables, databases, etc.

The computing device(s) 402 can also include a network interface 402E used to communicate, for example, with the other components of the computing system 400 (e.g., via a communication network). The network interface 402E can include any suitable components for interfacing with one or more network(s), including for example, transmitters, receivers, ports, controllers, antennas, and/or other suitable components. One or more devices can be configured to receive one or more commands from the computing device(s) 402 or provide one or more commands to the computing device(s) 402.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Thus, in operation, to facilitate the separation of a portion of the additive manufacturing build 110 (FIGS. 1-4), the one or more fluidization channels 310 are used to inject a fluid into the powder build material 114 (FIGS. 1-4) to fluidize and separate the powder build material 114 along a cut line defined by the position of the cutting knife 202 with respect to the additive manufacturing build 110 (FIGS. 1-4). In exemplary embodiments, a vacuum is drawn through the one or more vacuum channels 322 to remove the powder build material 114 loosened or separated by the fluid injected by the one or more fluidization channels 310 or otherwise disturbed by the insertion of the cutting knife 202 into the additive manufacturing build 110 (FIGS. 1-4). In exemplary embodiments, the fluid source 330 and the vacuum source 332 may be actuated concurrently with each other to facilitate the fluidization and removal of the powder build material 114 resulting from the separation of a portion of the additive manufacturing build 110 (FIGS. 1-4) by the cutting knife 202. However, it should also be understood that the fluid source 330 and the vacuum source 332 may also be actuated non-concurrently.

Thus, the de-powdering apparatus of embodiments of the present disclosure includes a separation station where at least a portion of an additive manufacturing build is moved out of a build box and separated from a remaining portion of the additive manufacturing build within the build box. A sleeve may be used to stabilize the additive manufacturing build during the separation process. The separated portion of the additive manufacturing build is moved to a de-powdering station where one or more agitation mechanisms function to separate unbound powder build material from the three-dimensional object. Thus, exemplary embodiments of the present disclosure decrease the time required for de-powdering (e.g., compared to de-powdering performed manually) and can accommodate complex build orientations and objects. Embodiments of the de-powdering system enable additive manufacturing builds from one or more different additive manufacturing machines to be de-powdered with a minimal spatial footprint.

Further aspects of the presently disclosed subject matter are provided by the following clauses:

An automated de-powdering system, comprising: a sleeve alignable with a build box, the build box including one or more sidewalls and a build plate, the one or more sidewalls and the build plate defining a build chamber configured to contain an additive manufacturing build, wherein the additive manufacturing build includes one or more objects disposed within a powder build material; at least one actuator actuatable to move the additive manufacturing build out of the build box and into the sleeve; and at least one mechanism automatically actuatable to separate at least a portion of the powder build material from the one or more objects.

The automated de-powdering system of the preceding clause, wherein the at least one actuator is automatically actuatable to remove the sleeve from the additive manufacturing build.

The automated de-powdering system of any preceding clause, wherein the at least one mechanism comprises at least one agitation mechanism automatically actuatable to induce vibrations into the additive manufacturing build.

The automated de-powdering system of any preceding clause, wherein the at least one agitation mechanism comprises at least one pneumatic agitation mechanism or at least one ultrasonic agitation mechanism.

The automated de-powdering system of any preceding clause, wherein the additive manufacturing build comprises a first portion and a second portion, and wherein the at least one actuator is actuatable to move the first portion into the sleeve.

The automated de-powdering system of any preceding clause, further comprising a separation mechanism insertable into the additive manufacturing build to separate the first portion from the second portion.

The automated de-powdering system of any preceding clause, wherein the separation mechanism comprises a cutting knife.

The automated de-powdering system of any preceding clause, wherein the cutting knife includes at least one fluidization channel or at least one vacuum channel.

The automated de-powdering system of any preceding clause, further comprising a separation mechanism insertable into the additive manufacturing build to separate the additive manufacturing build into at least two portions.

The automated de-powdering system of any preceding clause, further comprising at least one of a fluid source or a vacuum source fluidically coupled to the separation mechanism, and wherein the separation mechanism includes at least one of a fluidization channel or a vacuum channel.

The automated de-powdering system of any preceding clause, wherein the build box comprises a cover disposed over the additive manufacturing build, and wherein the at least one actuator is actuatable to remove the cover from the build box.

The automated de-powdering system of any preceding clause, further comprising at least one controller to automatically control at least one of the at least one actuator or the at least one mechanism.

The automated de-powdering system of any preceding clause, further comprising a conveyor, and wherein the at least one mechanism is automatically actuatable to separate at least the portion of the powder build material from the one or more objects while the additive manufacturing build is positioned on the conveyor.

The automated de-powdering system of any preceding clause, further comprising a conveyor, and wherein the at least one actuator is actuatable to move the sleeve, with the additive manufacturing build within the sleeve, to the conveyor.

The automated de-powdering system of any preceding clause, wherein the at least one mechanism comprises at least one vibration mechanism and at least one fluidization mechanism.

The automated de-powdering system of any preceding clause, further comprising a conveyor, and wherein the at least one actuator is actuatable to retract the sleeve from the additive manufacturing build and leave the additive manufacturing build on the conveyor.

The automated de-powdering system of any preceding clause, wherein the sleeve and the at least one mechanism are located within a sealable chamber.

An automated de-powdering method utilizing the automated de-powdering system of any preceding clause, the method comprising: moving the build plate, via the at least one actuator, to move the additive manufacturing build out of the build box and into the sleeve; and automatically actuating the at least one mechanism to separate the portion of the powder build material from the one or more objects.

The automated de-powdering method of any preceding clause, further comprising inserting a separation mechanism into the additive manufacturing build to separate the additive manufacturing build into at least two portions.

The automated de-powdering method of any preceding clause, wherein moving the build plate comprises moving the build plate, via the at least one actuator, to move a first portion of the additive manufacturing build out of the build box and into the sleeve; and further comprising inserting a separation mechanism into the additive manufacturing build to separate the first portion of the additive manufacturing build within the sleeve from a remaining portion of the additive manufacturing build within the build box.

The automated de-powdering method of any preceding clause, wherein inserting the separation mechanism into the additive manufacturing build comprises inserting a cutting knife and cutting into the additive manufacturing build.

The automated de-powdering method of any preceding clause, further comprising actuating at least one of a fluid source or a vacuum source fluidically coupled to the separation mechanism during the inserting.

The automated de-powdering method of any preceding clause, further comprising actuating the at least one actuator to move the sleeve, with the first portion within the sleeve, to a conveyor prior to automatically actuating the at least one mechanism.

A system, comprising: one or more additive manufacturing systems each configured to print an additive manufacturing build within a build box, the build box including one or more sidewalls and a build plate, the one or more sidewalls and the build plate defining a build chamber configured to contain the additive manufacturing build, wherein the additive manufacturing build includes one or more objects disposed within a powder build material; and an automated de-powdering system configured to receive the build box from the one or more additive manufacturing systems, the automated de-powdering system including: at least one actuator actuatable with respect to the build plate to move at least a portion of the additive manufacturing build out of the build box and into a sleeve; and at least one of a vibration mechanism or a fluidization mechanism automatically actuatable to separate at least a portion of the powder build material from the one or more objects.

An automated de-powdering system, comprising: a chamber configured to be sealable to provide a controlled environment for a de-powdering process of an additive manufacturing build, the additive manufacturing build disposed within a build box, the additive manufacturing build including one or more objects disposed within a powder build material; and an automated de-powdering machine disposed within the chamber, the automated de-powdering machine comprising: at least one actuator actuatable with respect to the build box to move at least a portion of the additive manufacturing build out of a build box and into a sleeve; and at least one mechanism automatically actuatable to separate at least a portion of the powder build material from the one or more objects.

An automated de-powdering system, comprising: a support structure configured to support a build box, the build box including one or more sidewalls and a build plate, the one or more sidewalls and the build plate defining a build chamber configured to contain an additive manufacturing build, wherein the additive manufacturing build includes one or more objects disposed within a powder build material; at least one actuator actuatable with respect to the build plate to move a first portion of the additive manufacturing build out of the build box and into a sleeve; a separation mechanism insertable into the additive manufacturing build to separate the first portion of the additive manufacturing build within the sleeve from a remaining portion of the additive manufacturing build; and at least one agitation mechanism actuatable to induce vibrations into the first portion to separate at least a portion of the powder build material from the one or more objects.

The automated de-powdering system of any preceding clause, wherein the at least one actuator is actuatable to remove the sleeve from the first portion.

The automated de-powdering system of any preceding clause, wherein the at least one agitation mechanism comprises at least one of a pneumatic agitation mechanism or an ultrasonic agitation mechanism.

The automated de-powdering system of any preceding clause, wherein the separation mechanism comprises a cutting knife.

The automated de-powdering system of any preceding clause, wherein the cutting knife includes at least one fluidization channel or at least one vacuum channel.

The automated de-powdering system of any preceding clause, wherein the cutting knife includes a top side and a bottom side, the bottom side opposite the top side, and wherein the at least one fluidization channel or the at least one vacuum channel is disposed between the top side and the bottom side.

The automated de-powdering system of any preceding clause, wherein the additive manufacturing build comprises one or more build layers containing the one or more objects within the powder build material, and wherein the additive manufacturing build comprises one or more foundation layers including the powder build material devoid of any of the one or more objects, and wherein the separation mechanism is configured to separate the first portion of the additive manufacturing build from the remaining portion of the additive manufacturing build at at least one of the one or more foundation layers.

The automated de-powdering system of any preceding clause, further comprising a sieve conveyor, and wherein the at least one agitation mechanism is actuatable to induce vibrations into the first portion while the first portion is positioned on the sieve conveyor.

The automated de-powdering system of any preceding clause, wherein the at least one actuator is actuatable to move the sleeve, with the first portion within the sleeve, to the sieve conveyor.

An automated de-powdering method, comprising: securing a build box with a support structure, wherein the build box comprises one or more sidewalls and a build plate, the one or more sidewalls and the build plate defining a build chamber configured to contain an additive manufacturing build, wherein the additive manufacturing build includes one or more objects disposed within a powder build material; moving the build plate, via at least one actuator, to move a first portion of the additive manufacturing build out of the build box and into a sleeve; inserting a separation mechanism into the additive manufacturing build to separate the first portion of the additive manufacturing build within the sleeve from a remaining portion of the additive manufacturing build; and inducing vibrations to the first portion to separate unbound powder build material from the one or more objects.

The automated de-powdering method of any preceding clause, wherein inserting the separation mechanism into the additive manufacturing build comprises inserting a cutting knife cutting into the additive manufacturing build.

The automated de-powdering method of any preceding clause, further comprising actuating at least one of a fluid source or a vacuum source fluidically coupled to the cutting knife during the inserting.

The automated de-powdering method of any preceding clause, wherein the additive manufacturing build comprises one or more build layers containing the one or more objects within the powder build material, and wherein the additive manufacturing build comprises one or more foundation layers including the powder build material devoid of any of the one or more objects, and further comprising inserting the separation mechanism into the additive manufacturing build at at least one of the one or more foundation layers.

The automated de-powdering method of any preceding clause, further comprising actuating the at least one actuator to remove the sleeve from the one or more objects.

The automated de-powdering method of any preceding clause, further comprising actuating the at least one actuator to move the sleeve, with the first portion within the sleeve, to a sieve conveyor.

An automated de-powdering system, comprising: a support structure configured to support a build box, the build box including one or more sidewalls and a build plate, the one or more sidewalls and the build plate defining a build chamber configured to contain an additive manufacturing build, wherein the additive manufacturing build includes one or more objects disposed within a powder build material; at least one actuator actuatable with respect to the build plate to move a first portion of the additive manufacturing build out of the build box and into a sleeve; a separation mechanism insertable into the additive manufacturing build to separate the first portion of the additive manufacturing build within the sleeve from a remaining portion of the additive manufacturing build, wherein the separation mechanism includes at least one of a fluidization channel or a vacuum channel; and at least one agitation mechanism actuatable to induce vibrations into the first portion to separate unbound powder build material from the one or more objects.

The automated de-powdering system of any preceding clause, further comprising a conveyor, and wherein the at least one actuator is actuatable to move the sleeve with the first portion within the sleeve to the conveyor.

The automated de-powdering system of any preceding clause, wherein the conveyor comprises a sieve conveyor.

The automated de-powdering system of any preceding clause, wherein the at least one actuator is actuatable to remove the sleeve from the first portion.

The automated de-powdering system of any preceding clause, further comprising at least one of a fluid source or a vacuum source is fluidically coupled to the separation mechanism.

The automated de-powdering system of any preceding clause, wherein the build box comprises a cover disposed over the additive manufacturing build, and wherein the at least one actuator is actuatable to remove the cover from the build box.

This written description uses examples to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. The scope of the claims encompasses such other examples that include structural elements that do not differ from the literal language of the claims or that have insubstantial differences from the literal languages of the claims.

## Claims

1. An automated de-powdering system (150), comprising:
a sleeve (170) alignable with a build box (104), the build box (104) including one or more sidewalls (106) and a build plate (140), the one or more sidewalls (106) and the build plate (140) defining a build chamber (108) configured to contain an additive manufacturing build (110), wherein the additive manufacturing build (110) includes one or more objects (130) disposed within a powder build material (114);
at least one actuator (142, 166, 173, 188) actuatable to move the additive manufacturing build (110) out of the build box (104) and into the sleeve (170); and
at least one mechanism (220) actuatable to separate at least a portion of the powder build material (114) from the one or more objects (130).

2. The automated de-powdering system (150) of claim 1, wherein the at least one actuator (142, 166, 173, 188) is actuatable to remove the sleeve (170) from the additive manufacturing build (110).

3. The automated de-powdering system (150) of claim 1, wherein the at least one mechanism (220) comprises at least one agitation mechanism (220) automatically actuatable to induce vibrations into the additive manufacturing build (110).

4. The automated de-powdering system (150) of claim 3, wherein the at least one agitation mechanism (220) comprises at least one pneumatic agitation mechanism (220) or at least one ultrasonic agitation mechanism (220).

5. The automated de-powdering system (150) of claim 1, wherein the additive manufacturing build (110) comprises a first portion (190) and a second portion (192), and wherein the at least one actuator (142, 166, 173, 188) is actuatable to move the first portion (190) into the sleeve (170).

6. The automated de-powdering system (150) of claim 5, further comprising a separation mechanism (200) insertable into the additive manufacturing build (110) to separate the first portion (190) from the second portion (192).

7. The automated de-powdering system (150) of claim 6, wherein the separation mechanism (200) comprises a cutting knife (202).

8. The automated de-powdering system (150) of claim 7, wherein the cutting knife (202) includes at least one fluidization channel (310) or at least one vacuum channel (312).

9. The automated de-powdering system (150) of any preceding claim,
wherein the build box (104) comprises a cover (168) disposed over the additive manufacturing build (110), and wherein the at least one actuator (142, 166, 173, 188) is actuatable to remove the cover (168) from the build box (104).

10. The automated de-powdering system (150) of any preceding claim, further comprising at least one controller (163) to automatically control at least one of the at least one actuator (142, 166, 173, 188) or the at least one mechanism (220).

11. The automated de-powdering system (150) of any preceding claim, further comprising a conveyor (210), and wherein the at least one mechanism (220) is automatically actuatable to separate at least the portion of the powder build material (114) from the one or more objects (130) while the additive manufacturing build (110) is positioned on the conveyor (210).

12. The automated de-powdering system (150) of any preceding claim, further comprising a conveyor (210), and wherein the at least one actuator (142, 166, 173, 188) is actuatable to move the sleeve (170), with the additive manufacturing build (110) within the sleeve (170), to the conveyor (210).

13. The automated de-powdering system (150) of any preceding claim, further comprising a conveyor (210), and wherein the at least one actuator (142, 166, 173, 188) is actuatable to retract the sleeve (170) from the additive manufacturing build (110) and leave the additive manufacturing build (110) on the conveyor (210).

14. The automated de-powdering system (150) of any preceding claim,
wherein the sleeve (170) and the at least one mechanism (220) are located within a sealable chamber (153).

15. An automated de-powdering method utilizing the automated de-powdering system (150) of claim 1, the method comprising:
moving the build plate (140), via the at least one actuator (142, 166, 173, 188), to move the additive manufacturing build (110) out of the build box (104) and into the sleeve (170); and
automatically actuating the at least one mechanism (220) to separate the portion of the powder build material (114) from the one or more objects (130).
